# EUROPEAN PATENT SPECIFICATION

(11) **EP 1 960 907 B1**
(45) Date of publication and mention of the grant of the patent: **07.08.2013**
(21) Application number: 05850467.1
(22) Date of filing: 16.12.2005
(51) Int. Cl.: G06F 17/30

(54) **XML DOCUMENT MANAGER SERVER METHOD AND APPARATUS**
XML-DOKUMENT-MANAGER-SERVER-VERFAHREN UND -VORRICHTUNG
PROCEDE ET APPAREIL POUR SERVEUR GESTIONNAIRE DE DOCUMENTS XML

(43) Date of publication of application: 27.08.2008
(73) Proprietor: Telefonaktiebolaget LM Ericsson (publ), 164 83 Stockholm (SE)
(72) Inventor: BERG, Stefan, 53177 Bonn (DE); ÅSTRÖM, Bo, S-11759 Stockholm (SE); BOBERG, Christer, S-13755 Tungelsta (SE); RYDE, Anders, S-13334 Saltsjöbaden (SE); TERRILL, Stephen, E-28006 Madrid (ES); PRZYBYSZ, Hubert, S-126 37 Hägersten (SE)
(74) Representative: Blake, Stephen James
(86) International application number: PCT/EP2005/056885
(87) International publication number: WO 2007/068289

(56) References cited:
- US-A1- 2006 053 208
- GUANGMING XING ET AL: "Managing XML Documents Using RDBMS" SOFTWARE ENGINEERING, ARTIFICIAL INTELLIGENCE, NETWORKING AND PARALLEL/DISTRIBUTED COMPUTING, 2005 AND FIRST ACIS INTERNATIONAL WORKSHOP ON SELF-ASSEMBLING WIRELESS NETWORKS. SNPD/SAWN 2005. SIXTH INTERNATIONAL CONFERENCE ON TOWSON, MD, USA 23-25 MAY, 23 May 2005 (2005-05-23), pages 186-191, XP010801587 ISBN: 0-7695-2294-7
- "XML Document Management Architecture - Candidate Version 1.0"[Online] 6 October 2005 (2005-10-06), XP002387254 Retrieved from the Internet: URL:www.openmobilealliance.org/release_pro gram/xdm_archive.html> [retrieved on 2006-06-26] cited in the application

## Description

### BACKGROUND OF THE INVENTION

### 1. Field of the Invention

The present invention relates to a method and apparatus relating to an Extensible Markup Language (XML) Document Manager (XDM) Server (XDMS), for example as defined by the Open Mobile Alliance (OMA).

### 2. Description of the Related Art

The Open Mobile Alliance (OMA) Architecture Document "XML Document Management Architecture" (currently at OMA-AD-XDM-V1_0-20051006-C) describes the features and architecture of the "XML Document Management enabler" as follows.

"The XML Document Management defines a common mechanism that makes user-specific service-related information accessible to the service enablers that need them. Such information is expected to be stored in the network where it can be located, accessed and manipulated (created, changed, deleted, etc.). XDM specifies how such information will be defined in well-structured XML documents, as well as the common protocol for access and manipulation of such XML documents. The XML Configuration Access Protocol (XCAP) [The Extensible Markup Language (XML) Configuration Access protocol (XCAP), http://www.ietf.org/internet-drafts/draft-ietf simple-xcap-07.txt, work in progress], as defined by IETF, has been chosen as the common XML Document Management protocol.

The XDM Specification ["XML Document Management (XDM) Specification", OMA-TS-XDM_Core-V1_0, available from http://www.openmobilealliance.org/ release program/XDM archive.html] defines two main features:
- The common protocol, XML Configuration Access Protocol (XCAP), by which principals can store and manipulate their service-related data, stored in a network as XML documents.
- The SIP subscription/notification mechanism by which principals can be notified of changes to such documents.

Documents accessed and manipulated via XCAP are stored in logical repositories in the network, called XML Document Management Servers (XDMS). Each repository may be associated with a functional entity which uses its data to perform its functions. (For example, a POC server accesses a POC XDMS to obtain a particular type of user document, a POC Group document, which provides the member list for a POC group session, and uses this information to invite such members for a POC session.)

The Shared XDM Specification ["Shared XDM Specification", OMA-TS-XDM_Shared-V1_0, available from http://www.openmobilealliance.org/ release_program/XDM_archive.html] specifies a specific type of repository, called a Shared XDMS, which stores documents which can be reused by other enablers. This enabler specifies one such document: the URI List. This is a convenient way for a principal to group together a number of end user identities (e.g., "Friends" or "Family) or other resources, where such a list is expected to be reused by a number of different enablers.

Due to the reusable nature of the XDM enabler, there will be interactions with other service enablers, and therefore, the architectural design of the XDM enabler accommodates the needs of those enablers."

The XML Document Manager (XDM) provides an architecture for managing service specific data. The XML Document Management defines a common mechanism that makes user-specific service-related information accessible to the service enablers that need them. The service-specific information is expressed and exchanged by means of XML documents, and this information is stored in the network where it can be located, accessed and manipulated (created, changed, deleted, etc.). The network entity assumed responsible for storing and manipulation of such information is the XDM Server (XDMS).

It is desirable to provide a technically and commercially efficient implementation of the above-described scheme.

The article "Managing XML Documents using RDBMS" by Guangming Xing et al, Proceedings of the Sixth International Conference on Software Engineering, Artificial Intelligence, Networking and Parallel/Distributed Computing and First ACIS International Workshop on Self-Assembling Wireless Networks, Pages 186 - 191, 2005, ISBN 0-7695-2294-7, discloses a method that maps XML data into relational tables; the method is range based, which means it can process queries with regular path expression efficiently.

### SUMMARY OF THE INVENTION

According to a first aspect of the present invention there is provided a method of providing an XML Document Manager Server function to an XML Document Manager Client, the XML Document Manager Server function being enabled by a database component for storing at least one XML document and a logic component for causing at least one operation to be performed on one or more of the at least one XML documents, the at least one operation being selectable from those defined by the XML Configuration Access Protocol, in which method the logic component is provided by a first network entity, with which the XML Document Manager Client communicates to receive the XML Document Manager Server function, and the database component is provided by a second network entity different to the first network entity.

The at least one operation may be selectable from the following: accessing the document; manipulating the document; creating the document; replacing the document; deleting the document; retrieving the document; storing the document; creating an XML element in the document; replacing an XML element in the document; deleting an XML element from the document; retrieving an XML element from the document; creating an XML attribute for an XML element in the document; deleting an XML attribute from the document; and retrieving an XML attribute from the document.

The method may comprise, when the at least one operation comprises an operation to retrieve an XML document already stored in the database component, sending a request for the XML document from the first network entity to the second network entity, and receiving the requested XML document at the first network entity from the second network entity.

The method may further comprise, when the at least one operation comprises an operation to modify the XML document, modifying the XML document at the first network entity and sending the modified XML document from the first network entity to the second network entity for storing back in the database component.

The method may comprise, when the at least one operation comprises an operation to store an XML document not already stored in the database component, sending the XML document from the first network entity to the second network entity for storing in the database component.

The first network entity may appear to the XML Document Manager Client as an XML Document Manager Server.

The second network entity may be a Home Subscriber Server of an IP Multimedia Subsystem.

Communication between the first network entity and the second network entity may be determined at least in part by the sh-interface protocol.

The second network entity may be optimised for data storage.

The method may comprise receiving at least one message from the XML Document Manager Client at the first network entity that specifies the at least one operation to be performed.

The at least one message may conform to the XML Configuration Access Protocol.

A plurality of such database components may be provided in separate respective second network entities.

The plurality of database components may be associated with different respective services.

The first network entity may communicate with the XML Document Manager Client via another network entity.

According to a second aspect of the present invention there is provided a network apparatus for providing an XML Document Manager Server function to an XML Document Manager Client, the XML Document Manager Server function being enabled by a database component for storing at least one XML document and a logic component for causing at least one operation to be performed on one or more of the at least one XML documents, the at least one operation being selectable from those defined by the XML Configuration Access Protocol, in which network apparatus the logic component is provided by a first network entity, with which the XML Document Manager Client communicates to receive the XML Document Manager Server function, and the database component is provided by a second network entity different to the first network entity.

According to a third aspect of the present invention there is provided a network entity for providing at least part of an XML Document Manager Server function to an XML Document Manager Client, the XML Document Manager Server function being enabled by a database component for storing at least one XML document and a logic component for causing at least one operation to be performed on one or more of the at least one XML documents, the at least one operation being selectable from those defined by the XML Configuration Access Protocol, the network entity comprising: the logic component, with the database component being provided by a separate entity of the network; and means for cooperating with the separate network entity to provide the XML Document Manager Server function to the XML Document Manager Client.

According to a fourth aspect of the present invention there is provided an operating program which, when run on an apparatus, causes the apparatus to carry out a method according to the first aspect of the present invention.

According to a fifth aspect of the present invention there is provided an operating program which, when loaded into an apparatus, causes the apparatus to become apparatus according to the third aspect of the present invention.

The operating program may be carried on a carrier medium. The carrier medium may be a transmission medium. The carrier medium may be a storage medium.

### BRIEF DESCRIPTION OF THE DRAWINGS

Figure 1 is a block diagram schematically illustrating network entities of an existing XML Document Management Architecture solution;
Figure 2 is a block diagram schematically illustrating network entities of an XML Document Management Architecture embodying the present invention;
Figure 3 is a signal flow diagram illustrating the operation of an embodiment of the present invention to retrieve service data from an XDM Server;
Figure 4 is a signal flow diagram illustrating the operation of an embodiment of the present invention to modify service data associated with an XDM Server; and
Figure 5 is a schematic diagram illustrating parts of a UMTS network.

### DETAILED DESCRIPTION OF THE PREFERRED EMBODIMENTS

As described above, in the existing solution for the XML Document Management Architecture, the network entity assumed responsible for storing and manipulation of service-specific information, expressed and exchanged by means of XML documents, is the XDM Server (XDMS). The following is an extract from the above-referenced OMA Architecture Document: "Documents accessed and manipulated via XCAP are stored in (logical) repositories in the network, called generically XML Document Management Servers (XDMS), each repository being associated with a functional entity which uses the data in its associated repository to perform its functions. For example, a POC server accesses a POC XDMS to obtain a particular type of user document, a POC Group document, which provides the member list for a POC group session, and uses this information to invite such members for a POC session."

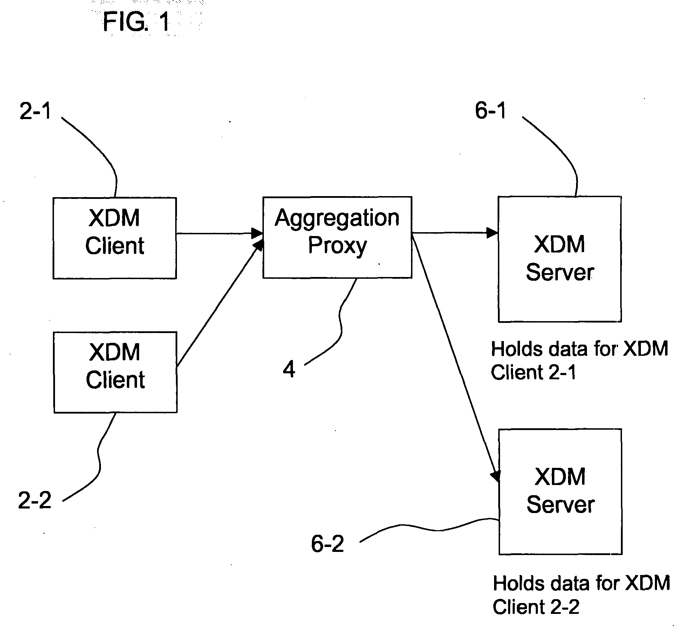

Figure 1 illustrates the relevant network entities defined in the above-referenced OMA Architecture Document (the OMA Architecture Document introduces other network entities, but these are of little relevance here). In Figure 1, two XDM Clients 2-1 and 2-2 are in communication with respective different XDM Servers 6-1 and 6-2 via an Aggregation Proxy 4. The XDM Clients 2-1 and 2-2 are client entities that provide access to the various XDMS features. They provide an end user with the possibility to create, modify or delete an XML document, and by that create, modify or delete service specific data. The Aggregation Proxy 4 is the contact point for the XDM Clients 2-1 and 2-2 to access XML documents stored in any XDM Server; the Aggregation Proxy 4 performs functions like authentication or routing of requests. The XDM Servers 6-1 and 6-2 hold the service specific data, and implement the procedures to create, modify or delete such data.

The existing solution as shown in Figure 1 assumes the service specific data to be stored and available in the XDMS. As a consequence, a user of this data is bound to a particular instance of the XDMS. This has the consequence that high availability requirements are placed components of the XDMS, which means higher development costs. Another consequence is that two copies of the service specific data exist in the network: one in the XDMS, and another one in the network entity responsible for executing the service (for example an IMS application server, for more of which, see below). This leads to a requirement for synchronisation, which is technically burdensome to provide.

An embodiment of the present invention is intended to address the above-mentioned problems.

Internally, it can be considered that a direct implementation of an XDMS as set out in the above-referenced OMA Architecture Document would consist of (at least) two sub-functions: (a) database component for storing the service specific data; and (b) an XDMS logic component for handling the manipulation of the data. In the existing solution described above with reference to Figure 1, the XDMS is aware of the current status of the service specific data, and it can be regarded as state-full.

On the contrary, in an embodiment of the present invention, storing of the service specific data is separated from the XDMS execution logic, and as such an embodiment of the present invention can be seen as introducing a state-less XDMS.

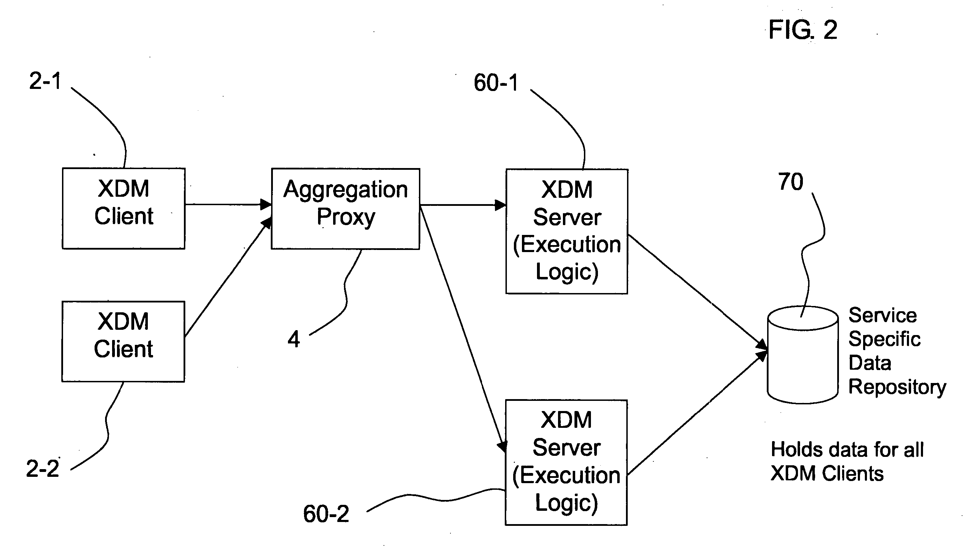

Figure 2 illustrates an embodiment of the present invention. The architecture outlined above with reference to Figure 1 is enhanced in the following way in the embodiment shown in Figure 2. The XDM Servers 6-1 and 6-2 of Figure 1 are respectively replaced by XDM Server Execution Logic network entities 60-1 and 60-2 in Figure 2. In addition, a Service Specific Data Repository 70 is provided in Figure 2.

The network entities 60-1 and 60-2 are referred to above as XDM Server Execution Logic network entities, but they are visible to the XDM Clients 2-1 and 2-2 as if they were "normal" XDM Servers like the XDM Servers 6-1 and 6-2 of Figure 1, differing from "normal" XDM Servers mainly in having only the XDMS logic component and not the database component. The XDM Clients 2-1 and 2-2 are unaffected by, and do not need to know of, the separation of the data repository 70 from the XDM Server Execution Logic network entities 60-1 and 60-2. For this reason, the XDM Server Execution Logic network entities 60-1 and 60-2 in an embodiment of the present invention can also be referred to simply as XDM Servers 60-1 and 60-2.

In an embodiment of the present invention, at invocation of the XDMS function, data is fetched from a central network repository (for example, the Service Specific Data Repository 70), which can be optimised for data storage. In this way, the XDMS Execution Logic network entities 60-1 and 60-2 are state-less and can be implemented without considering high availability requirements, as any XDMS Execution Logic entity in the network could be used as fall-back. It also eliminates the need for data synchronisation.

At reception of an XDM request to modify service specific data, in an embodiment of the present invention the XDMS Execution Logic network entity 60-1 or 60-2 would:
- Fetch an up-to-date copy of the service specific data from the data repository 70.
- Perform the necessary actions on the data.
- Store the modified data back into the data repository 70.

Request for creation or deletion of service specific data are handled in a similar manner. Using this mechanism, the XDMS Execution Logic network entity 60-1 or 60-2 does not need to have any memory of the current state of the service data. It can be implemented in a transparent and state-less way.

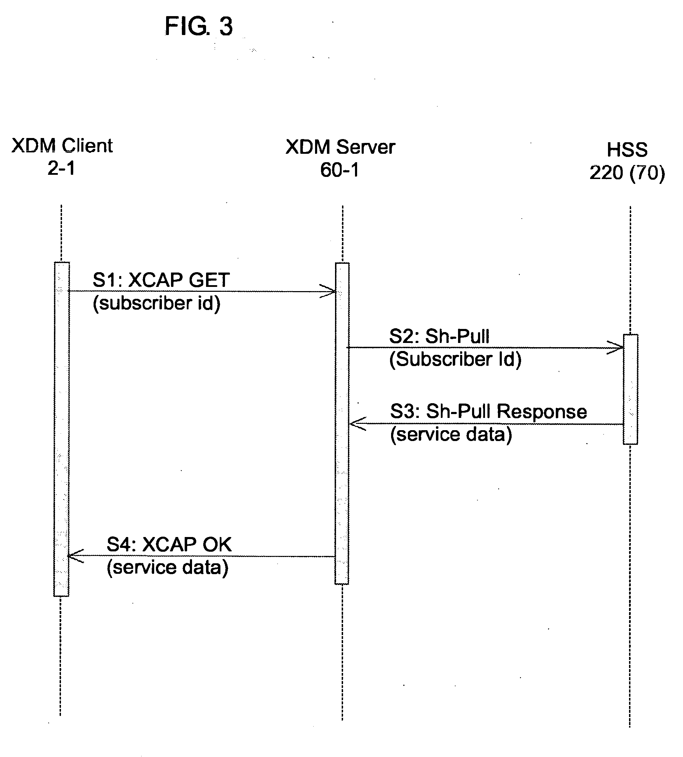

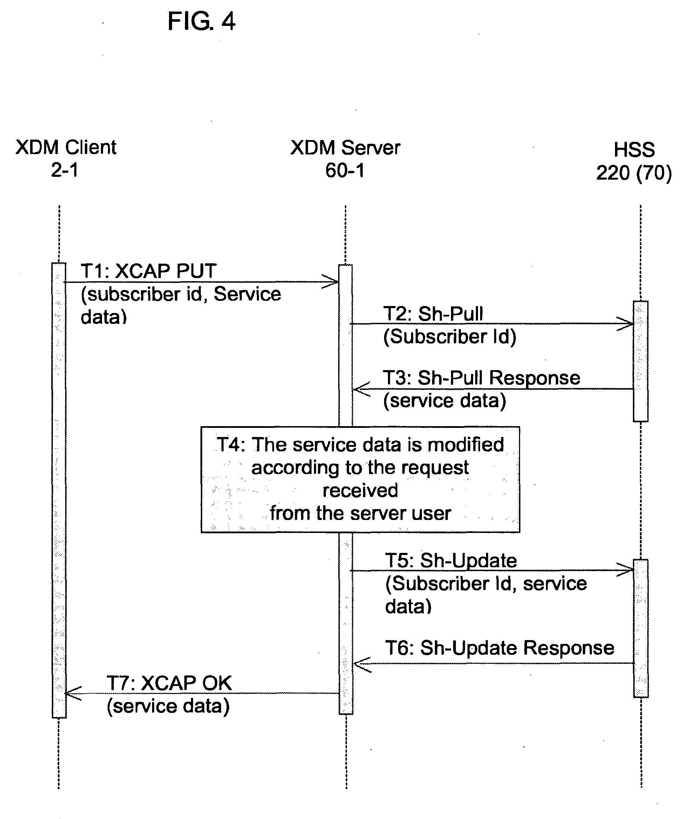

Retrieval and modification of service data in an embodiment of the present invention will be described in more detail below with reference to Figures 3 and 4 respectively. This embodiment is described in the context of IP Multimedia Subsystem (IMS), and before a detailed description of the embodiment, the context within which the embodiment is implemented will first be described.

UMTS (Universal Mobile Telecommunications System) is a third generation wireless system designed to provide higher data rates and enhanced services to subscribers. UMTS is a successor to the Global System for Mobile Communications (GSM), with an important evolutionary step between GSM and UMTS being the General Packet Radio Service (GPRS). GPRS introduces packet switching into the GSM core network and allows direct access to packet data networks (PDNs). This enables high-data rate packets switch transmissions well beyond the 64kbps limit of ISDN through the GSM call network, which is a necessity for UMTS data transmission rates of up to 2Mbps. UMTS is standardised by the 3^{rd} Generation Partnership Project (3GPP) which is a conglomeration of regional standards bodies such as the European Telecommunication Standards Institute (ETSI), the Association of Radio Industry Businesses (ARIB) and others.

The standardisation of UMTS has progressed in three phases. The first phase is known as Release '99. The Release '99 specifications define the basic architecture that consists of the UMTS Terrestrial Radio Access Network (UTRAN), Circuit Switched Core Network (CS-CN) and Packet Switched Core Network (PS-CN). The release '99 specification offers traditional circuit as well as packet-switched services. The next phase in the standardisation process is Release 4, adding new services to the '99 architecture. Release 5 represents a significant shift, offering both traditional telephony as well as packet-switched services over a single converged packet-based network.

The UMTS Release 5 architecture adds a new subsystem known as the IP Multimedia Subsystem (IMS) to the PS-CN for supporting traditional telephony as well as new multimedia services. IMS provides IP Multimedia services over mobile communication networks (3GPP TS 22.228, TS 23.228, TS 24.229, TS 29.228, TS 29.229, TS 29.328 and TS 29.329 Releases 5 to 7). IMS provides key features to enrich the end-user person-to-person communication experience through the use of standardised IMS Service Enablers, which facilitate new rich person-to-person (client-to-client) communication services as well as person-to-content (client-to-server) services over IP-based networks. The IMS is able to connect to both PSTN/ISDN (Public Switched Telephone Network/Integrated Services Digital Network) as well as the Internet.

The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly. The 3GPP has chosen SIP for signalling between a User Equipment (UE) and the IMS as well as between the components within the IMS.

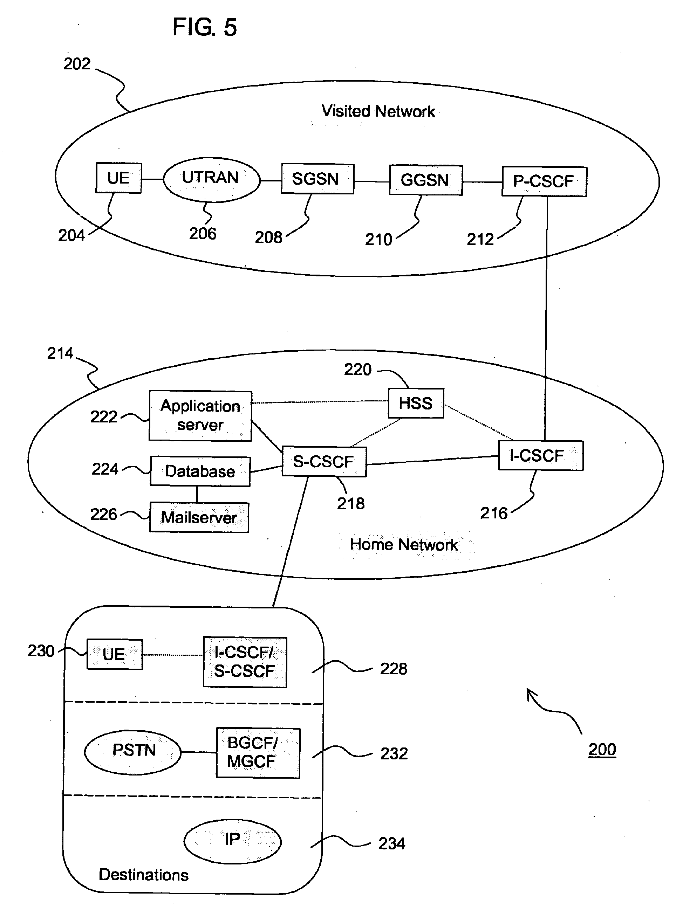

Figure 5 is an illustrative diagram showing a UMTS communications network 200 comprising a User Equipment (UE) 204 located within a Visited Network 202. The UE 204 is attached to a Serving GPRS Support Node (SGSN) 208 via a UTRAN 206, which is in turn in communication with a Gateway GPRS Support Node (GGSN) 210. Within the Visited Network 202, the GGSN 210 communicates with a Proxy Call Session Control Function (P-CSCF) 212, which is the first point of contact in the visited IMS network for the UE 204. The P-CSCF 212 forwards SIP registration messages and session establishment messages to the Home Network 214.

The first point of contact within the Home Network 214 is the Interrogating Call Session Control Function (I-CSCF) 216, which is an optional node in the IMS architecture, whose main purpose is to query the Home Subscriber Server (HSS) 220 to find the location of the Serving Call Session Control Function (S-CSCF) 218. The S-CSCF 218 performs session management for the IMS network, and there can be several S-CSCFs in the network. The HSS 220 is a centralised subscriber database, and has evolved from the Home Location Register (HLR) from earlier UMTS releases. The HSS 220 interfaces with the I-CSCF and the S-CSCF to provide information about the location of the subscriber and the subscriber's subscription information.

The communications network 200 further comprises an application server 222, a database 224 and a mail server 226 located in the Home Network 214. From the S-CSCF 218, signalling messages are passed to the intended destination, which may be another Release 5 IMS network 228 comprising a UE 230, or to a legacy network 232 comprising a PSTN interfaced through a Media Gateway Control Function (MGCF), or to an IP network 234. The application servers 222 are for implementing IMS service functionality, providing services to end-users in an IMS system.

Specific details of the operation of the UMTS communications network 200 and of the various components within such a network can be found from the Technical Specifications for UMTS which are available from http://www.3gpp.org.

Returning now to Figures 3 and 4, in this embodiment of the present invention, which is set in the context of the IMS, the central repository 70 described above with reference to Figure 2 is embodied in the HSS 220 shown in Figure 5. The standardised sh-interface [3GPP TS 29.328 V6.3.0 (2004-09); Technical Specification; 3rd Generation Partnership Project; Technical Specification Group Core Network; IP Multimedia (IM) Subsystem Sh interface; Signalling flows and message contents] can be used to access/store the service specific data in HSS 220, as will now be described in more detail.

Referring to Figure 3, a method embodying the present invention is described in which the XDM Client 2-1 wishes to retrieve service data from the XDM Server 60-1. In step S1 an XCAP GET message is sent from the XDM Client 2-1 to the XDM Server 60-1 containing subscriber identification; the service data is identified in this embodiment by means of XML schema and name space identifiers.. In response, in step S2 the XDM Server 60-1 sends a Sh-Pull message to the HSS 220 with the subscriber identification. In response to receipt of the Sh-Pull message, the HSS 220 retrieves the service data from the database and sends it to the XDM Server 60-1 with a Sh-Pull Response message in step S3. The service data is then forwarded to the XDM Client 2-1 by the XDM Server 60-1 with an XCAP OK message in step S4.

Referring to Figure 4, a method embodying the present invention is described in which the XDM Client 2-1 wishes to modify service data associated with the XDM Server 60-1. In step T1 an XCAP PUT message is sent from the XDM Client 2-1 to the XDM Server 60-1 containing subscriber identification and the modified service data, or at least information setting out how the service data is to be modified; this might be expressed by means of an update XML document - for example in step S4 above the original XML document is sent to the XDM Client 2-1, which updates the document, and sends it back in step T1. In response, in step T2 the XDM Server 60-1 sends a Sh-Pull message to the HSS 220 together with the subscriber identification; the above-mentioned 3GPP Sh Interface Specification defines the access key to the service data in the HSS (both for Sh-pull and Sh-update) as: User-Identity + Data-Reference + Service-Indication). In response to receipt of the Sh-Pull message, the HSS 220 retrieves the service data from the database and sends it to the XDM Server 60-1 with a Sh-Pull Response message in step T3. In step T4 the XDM Server 60-1 modifies the service data according to the request received in step T1, and in step T5 the modified service data is sent to the HSS 220 together with the subscriber identification with a Sh-Update message. When the modified service data has been stored in the HSS 220, the HSS 220 replies to the XDM Server 60-1 with a Sh-Update Response message in T6, and in step T7 the modified service data is sent to the XDM Client 2-1 by the XDM Server 60-1 with an XCAP OK message.

An embodiment of the present invention provides one or more of the following advantages over the above-described existing solution:
- A state-less XDMS implementation does not need to fulfil high availability requirements, and is therefore less costly.
- Data storage can be centralised in the network, and therefore be easily accessed also by other entities, without creating the need for synchronisation.
- Data storage can be centralised in the network elements which are optimised for that purpose.

It will be appreciated that, although the above embodiment is described in the context of IMS and UMTS, it will be appreciated that IMS is not limited to mobile networks but is also applicable to fixed networks and other types of network altogether. An embodiment of the present invention is not limited to its application within the context of IMS or UMTS.

It will be appreciated that operation of one or more of the above-described components can be controlled by a program operating on the device or apparatus. Such an operating program can be stored on a computer-readable medium, or could, for example, be embodied in a signal such as a downloadable data signal provided from an Internet website. The appended claims are to be interpreted as covering an operating program by itself, or as a record on a carrier, or as a signal, or in any other form.

## Claims

1. A method of providing an XML Document Manager Server function to an XML Document Manager Client (2-1, 2-2), the XML Document Manager Server function being enabled by a database component for storing at least one XML document and a logic component for causing at least one operation to be performed on one or more of the at least one XML documents, in which method the logic component is provided by a first network entity (60-1, 60-2), with which the XML Document Manager Client (2-1, 2-2) communicates to receive the XML Document Manager Server function, and the database component is provided by a second network entity (70, 220) different to the first network entity (60-1, 60-2), **characterized in that** the at least one operation is selectable from those defined by the XML Configuration Access Protocol.

2. A method as claimed in claim 1, wherein at least one XML document comprises service-specific data.

3. A method as claimed in claim 1 or 2, in which the at least one operation is selectable from the following: accessing the document; manipulating the document; creating the document; replacing the document; deleting the document; retrieving the document; storing the document; creating an XML element in the document; replacing an XML element in the document; deleting an XML element from the document; retrieving an XML element from the document; creating an XML attribute for an XML element in the document; deleting an XML attribute from the document; and retrieving an XML attribute from the document.

4. A method as claimed in any preceding claim 1, 2 or 3, comprising, when the at least one operation comprises an operation to retrieve an XML document already stored in the database component, sending a request for the XML document from the first network entity to the second network entity, and receiving the requested XML document at the first network entity from the second network entity.

5. A method as claimed in claim 4, further comprising, when the at least one operation comprises an operation to modify the XML document, modifying the XML document at the first network entity and sending the modified XML document from the first network entity to the second network entity for storing back in the database component.

6. A method as claimed in any preceding claim, comprising, when the at least one operation comprises an operation to store an XML document not already stored in the database component, sending the XML document from the first network entity to the second network entity for storing in the database component.

7. A method as claimed in any preceding claim, wherein the first network entity appears to the XML Document Manager Client as an XML Document Manager Server.

8. A method as claimed in any preceding claim, wherein the second network entity is a Home Subscriber Server of an IP Multimedia Subsystem.

9. A method as claimed in claim 8, wherein communication between the first network entity and the second network entity is determined at least in part by the sh-interface protocol.

10. A method as claimed in any preceding claim, wherein the second network entity is optimised for data storage.

11. A method as claimed in any preceding claim, comprising receiving at least one message from the XML Document Manager Client at the first network entity that specifies the at least one operation to be performed.

12. A method as claimed in claim 11, wherein the at least one message conforms to the XML Configuration Access Protocol.

13. A method as claimed in any preceding claim, in which a plurality of such database components are provided in separate respective second network entities.

14. A method as claimed in claim 13, wherein the plurality of database components are associated with different respective services.

15. A method as claimed in any preceding claim, wherein the first network entity communicates with the XML Document Manager Client via another network entity.

16. Network apparatus for providing an XML Document Manager Server function to an XML Document Manager Client (2-1, 2-2), the XML Document Manager Server function being enabled by a database component for storing at least one XML document and a logic component for causing at least one operation to be performed on one or more of the at least one XML documents, in which network apparatus the logic component is provided by a first network entity (60-1, 60-2), with which the XML Document Manager Client (2-1, 2-2) communicates to receive the XML Document Manager Server function, and the database component is provided by a second network entity (70, 220) different to the first network entity (60-1, 60-2), **characterized in that** the at least one operation is selectable from those defined by the XML Configuration Access Protocol.

17. A network entity for providing at least part of an XML Document Manager Server function to an XML Document Manager Client (2-1, 2-2), the XML Document Manager Server function being enabled by a database component for storing at least one XML document and a logic component for causing at least one operation to be performed on one or more of the at least one XML documents, the network entity comprising: the logic component, with the database component being provided by a separate entity (70, 220) of the network; and means for cooperating with the separate network entity to provide the XML Document Manager Server function to the XML Document Manager Client (2-1, 2-2), **characterized in that** the at least one operation is selectable from those defined by the XML Configuration Access Protocol.

18. An operating program which, when run on an apparatus, causes the apparatus to carry out a method as claimed in one of claims 1 to 15.

19. An operating program as claimed in claim 18, carried on a carrier medium.

20. An operating program as claimed in claim 19, wherein the carrier medium is a transmission medium.

21. An operating program as claimed in claim 19, wherein the carrier medium is a storage medium.

## Patentansprüche

1. Verfahren zum Bereitstellen einer XML-Dokument-Manager-Server-Funktion für einen XML-Dokument-Manager-Client (2-1, 2-2), wobei die XML-Dokument-Manager-Server-Funktion durch eine Datenbank-Komponente zum Speichern mindestens eines XML-Dokuments und eine Logik-Komponente zum Bewirken, dass mindestens eine Operation an einem oder mehreren des mindestens eines XML-Dokuments durchgeführt wird, ermächtigt wird, wobei in dem Verfahren die Logik-Komponente durch eine erste Netzwerkinstanz (60-1, 60-2) bereitgestellt wird, mit der der XML-Dokument-Manager-Client (2-1, 2-2) kommuniziert, um die XML-Dokument-Manager-Server-Funktion zu empfangen, und die Datenbank-Komponente durch eine zweite Netzwerkinstanz (70, 220), die von der ersten Netzwerkinstanz (60-1, 60-2) verschieden ist, bereitgestellt wird, **dadurch gekennzeichnet, dass** die mindestens eine Operation aus denjenigen, die durch das XML Configuration Access Protocol definiert sind, auswählbar ist.

2. Verfahren nach Anspruch 1, wobei mindestens ein XML-Dokument dienstspezifische Daten umfasst.

3. Verfahren nach Anspruch 1 oder 2, wobei die mindestens eine Operation aus dem Folgenden auswählbar ist: Zugreifen auf das Dokument; Manipulieren des Dokuments; Erstellen des Dokuments; Ersetzen des Dokuments; Löschen des Dokuments; Wiederauffinden des Dokuments; Speichern des Dokuments; Erstellen eines XML-Elements in dem Dokument; Ersetzen eines XML-Elements in dem Dokument; Löschen eines XML-Elements aus dem Dokument; Wiederauffinden eines XML-Elements aus dem Dokument; Erstellen eines XML-Attributs für ein XML-Element in dem Dokument; Löschen eines XML-Attributs aus dem Dokument; und Wiederauffinden eines XML-Attributs aus dem Dokument.

4. Verfahren nach einem der vorstehenden Ansprüche 1, 2 oder 3, umfassend, wenn die mindestens eine Operation eine Operation zum Wiederauffinden eines bereits in der Datenbank-Komponente gespeicherten XML-Dokuments umfasst, Senden einer Anforderung des XML-Dokuments von der ersten Netzwerkinstanz zu der zweiten Netzwerkinstanz und Empfangen des angeforderten XML-Dokuments an der ersten Netzwerkinstanz von der zweiten Netzwerkinstanz.

5. Verfahren nach Anspruch 4, ferner umfassend, wenn die mindestens eine Operation eine Operation zum Modifizieren des XML-Dokuments umfasst, Modifizieren des XML-Dokuments an der ersten Netzwerkinstanz und Senden des modifizierten XML-Dokuments von der ersten Netzwerkinstanz zu der zweiten Netzwerkinstanz zum Zurückspeichern in der Datenbank-Komponente.

6. Verfahren nach einem der vorstehenden Ansprüche, umfassend, wenn die mindestens eine Operation eine Operation zum Speichern eines noch nicht gespeicherten XML-Dokuments in der Datenbank-Komponente umfasst, Senden des XML-Dokuments von der ersten Netzwerkinstanz zu der zweiten Netzwerkinstanz zum Speichern in der Datenbank-Komponente.

7. Verfahren nach einem der vorstehenden Ansprüche, wobei die erste Netzwerkinstanz dem XML-Dokument-Manager-Client als ein XML-Dokument-Manager-Server erscheint.

8. Verfahren nach einem der vorstehenden Ansprüche, wobei die zweite Netzwerkinstanz ein Heimteilnehmerserver eines IP-Multimedia-Subsystems ist.

9. Verfahren nach Anspruch 8, wobei Kommunikation zwischen der ersten Netzwerkinstanz und der zweiten Netzwerkinstanz mindestens teilweise durch das sh-Schnittstellenprotokoll bestimmt wird.

10. Verfahren nach einem der vorstehenden Ansprüche, wobei die zweite Netzwerkinstanz für Datenspeicherung optimiert ist.

11. Verfahren nach einem der vorstehenden Ansprüche, umfassend Empfangen mindestens einer Nachricht von dem XML-Dokument-Manager-Client an der ersten Netzwerkinstanz, die die mindestens eine durchzuführende Operation spezifiziert.

12. Verfahren nach Anspruch 11, wobei die mindestens eine Nachricht dem XML Configuration Access Protocol entspricht.

13. Verfahren nach einem der vorstehenden Ansprüche, wobei eine Vielzahl derartiger Datenbank-Komponenten in separaten jeweiligen zweiten Netzwerkinstanzen bereitgestellt wird.

14. Verfahren nach Anspruch 13, wobei die Vielzahl von Datenbank-Komponenten mit verschiedenen jeweiligen Diensten assoziiert ist.

15. Verfahren nach einem der vorstehenden Ansprüche, wobei die erste Netzwerkinstanz über eine andere Netzwerkinstanz mit dem XML-Dokument-Manager-Client kommuniziert.

16. Netzwerkvorrichtung zum Bereitstellen einer XML-Dokument-Manager-Server-Funktion für einen XML-Dokument-Manager-Client (2-1, 2-2), wobei die XML-Dokument-Manager-Server-Funktion durch eine Datenbank-Komponente zum Speichern mindestens eines XML-Dokuments und eine Logik-Komponente zum Bewirken, dass mindestens eine Operation an einem oder mehreren des mindestens eines XML-Dokuments durchgeführt wird, ermächtigt wird, wobei in der Netzwerkvorrichtung die Logik-Komponente durch eine erste Netzwerkinstanz (60-1, 60-2) bereitgestellt wird, mit der der XML-Dokument-Manager-Client (2-1, 2-2) kommuniziert, um die XML-Dokument-Manager-Server-Funktion zu empfangen, und die Datenbank-Komponente durch eine zweite Netzwerkinstanz (70, 220), die von der ersten Netzwerkinstanz (60-1, 60-2) verschieden ist, bereitgestellt wird, **dadurch gekennzeichnet, dass** die mindestens eine Operation aus denjenigen, die durch das XML Configuration Access Protocol definiert sind, auswählbar ist.

17. Netzwerkinstanz zum Bereitstellen mindestens eines Teils einer XML-Dokument-Manager-Server-Funktion für einen XML-Dokument-Manager-Client (2-1, 2-2), wobei die XML-Dokument-Manager-Server-Funktion durch eine Datenbank-Komponente zum Speichern mindestens eines XML-Dokuments und eine Logik-Komponente zum Bewirken, dass mindestens eine Operation an einem oder mehreren des mindestens eines XML-Dokuments durchgeführt wird, ermächtigt wird, die Netzwerkinstanz umfassend: die Logik-Komponente, wobei die Datenbank-Komponente von einer separaten Instanz (70, 220) des Netzwerks bereitgestellt wird; und Mittel zum Zusammenarbeiten mit der separaten Netzwerkinstanz zum Bereitstellen der XML-Dokument-Manager-Server-Funktion für den XML-Dokument-Manager-Client (2-1, 2-2), **dadurch gekennzeichnet, dass** die mindestens eine Operation aus denjenigen, die durch das XML Configuration Access Protocol definiert sind, auswählbar ist.

18. Operationsprogramm, das, wenn es auf einer Vorrichtung ausgeführt wird, bewirkt, dass die Vorrichtung ein Verfahren nach einem der Ansprüche 1 bis 15 ausführt.

19. Operationsprogramm nach Anspruch 18, getragen auf einem Trägermedium.

20. Operationsprogramm nach Anspruch 19, wobei das Trägermedium ein Übertragungsmedium ist.

21. Operationsprogramm nach Anspruch 19, wobei das Trägermedium ein Speichermedium ist.

## Revendications

1. Procédé de fourniture d'une fonction de serveur gestionnaire de documents XML à un système client gestionnaire de documents XML (2 - 1, 2 - 2), la fonction de serveur gestionnaire de documents XML étant permise par un composant de base de données pour stocker au moins un document XML et un composant logique pour amener au moins une opération à être mise en oeuvre sur un ou plusieurs documents dudit au moins un document XML, dans lequel procédé le composant logique est fourni par une première entité de réseau (60 - 1, 60 - 2) avec laquelle le système client gestionnaire de documents XML (2 - 1, 2 - 2) est en communication pour recevoir la fonction de serveur gestionnaire de documents XML, et le composant de base de données est fourni par une seconde entité de réseau (70, 220) différente de la première entité de réseau (60 - 1, 60 - 2), **caractérisé en ce que** ladite au moins une opération peut être sélectionnée parmi celles définies par le protocole XCAP (XML Configuration Access Protocol).

2. Procédé selon la revendication 1, dans lequel au moins un document XML comprend des données spécifiques aux services.

3. Procédé selon la revendication 1 ou 2, dans lequel ladite au moins une opération peut être sélectionnée parmi les suivantes consistant à : accéder au document ; manipuler le document ; créer le document ; remplacer le document ; supprimer le document ; récupérer le document ; stocker le document ; créer un élément XML dans le document ; remplacer un élément XML dans le document ; supprimer un élément XML du document ; récupérer un élément XML à partir du document ; créer un attribut XML pour un élément XML dans le document ; supprimer un attribut XML du document ; et récupérer un attribut XML à partir du document.

4. Procédé selon l'une quelconque des revendications 1, 2 ou 3, consistant à, lorsque ladite au moins une opération comprend une opération visant à récupérer un document XML déjà stocké dans le composant de base de données, envoyer une demande concernant le document XML de la première entité de réseau à la seconde entité de réseau, et recevoir le document XML demandé au niveau de la première entité de réseau à partir de la seconde entité de réseau.

5. Procédé selon la revendication 4, consistant en outre à, lorsque ladite au moins une opération comprend une opération visant à modifier le document XML, modifier le document XML au niveau de la première entité de réseau et envoyer le document XML modifié de la première entité de réseau à la seconde entité de réseau, en vue de le stocker en retour dans le composant de base de données.

6. Procédé selon l'une quelconque des revendications précédentes, consistant à, lorsque ladite au moins une opération comprend une opération visant à stocker un document XML qui n'est pas déjà stocké dans le composant de base de données, à envoyer le document XML de la première entité de réseau à la seconde entité de réseau, en vue de le stocker dans le composant de base de données.

7. Procédé selon l'une quelconque des revendications précédentes, dans lequel la première entité de réseau fait office, pour le système client gestionnaire de documents XML, de serveur gestionnaire de documents XML.

8. Procédé selon l'une quelconque des revendications précédentes, dans lequel la seconde entité de réseau est un serveur d'abonné résidentiel d'un sous-système multimédia IP.

9. Procédé selon la revendication 8, dans lequel la communication entre la première entité de réseau et la seconde entité de réseau est déterminée au moins en partie par le protocole d'interface sh.

10. Procédé selon l'une quelconque des revendications précédentes, dans lequel la seconde entité de réseau est optimisée pour le stockage de données.

11. Procédé selon l'une quelconque des revendications précédentes, consistant à recevoir au moins un message du système client gestionnaire de documents XML au niveau de la première entité de réseau, lequel spécifie la au moins une opération à mettre en oeuvre.

12. Procédé selon la revendication 11, dans lequel ledit au moins un message est conforme au protocole XCAP.

13. Procédé selon l'une quelconque des revendications précédentes, dans lequel une pluralité de tels composants de base de données est fournie dans des secondes entités de réseau respectives individuelles.

14. Procédé selon la revendication 13, dans lequel la pluralité de composants de base de données est associée à différents services respectifs.

15. Procédé selon l'une quelconque des revendications précédentes, dans lequel la première entité de réseau communique avec le système client gestionnaire de documents XML par l'intermédiaire d'une autre entité de réseau.

16. Dispositif de réseau destiné à fournir une fonction de serveur gestionnaire de documents XML à un système client gestionnaire de documents XML (2 - 1, 2 - 2), la fonction de serveur gestionnaire de documents XML étant permise par un composant de base de données pour stocker au moins un document XML et un composant logique pour amener au moins une opération à être mise en oeuvre sur un ou plusieurs documents dudit au moins un document XML, dans lequel dispositif de réseau le composant logique est fourni par une première entité de réseau (60 - 1, 60 - 2) avec laquelle le système client gestionnaire de documents XML (2-1, 2-2) est en communication pour recevoir la fonction de serveur gestionnaire de documents XML, et le composant de base de données est fourni par une seconde entité de réseau (70, 220) différente de la première entité de réseau (60 - 1, 60 - 2), **caractérisé en ce que** ladite au moins une opération peut être sélectionnée parmi celles définies par le protocole XCAP (XML Configuration Access Protocol).

17. Entité de réseau destinée à fournir au moins une partie d'une fonction de serveur gestionnaire de documents XML à un système client gestionnaire de documents XML (2 - 1, 2 - 2), la fonction de serveur gestionnaire de documents XML étant permise par un composant de base de données pour stocker au moins un document XML et un composant logique pour amener au moins une opération à être mise en oeuvre sur un ou plusieurs documents dudit au moins un document XML, l'entité de réseau comprenant : le composant logique, où le composant de base de données est fourni par une entité individuelle (70, 220) du réseau ; et un moyen pour coopérer avec l'entité de réseau individuelle en vue de fournir la fonction de serveur gestionnaire de documents XML au système client gestionnaire de documents XML (2 - 1, 2 - 2), **caractérisé en ce que** ladite au moins une opération peut être sélectionnée parmi celles définies par le protocole XCAP.

18. Programme d'exploitation qui, lorsqu'il est exécuté sur un dispositif, amène le dispositif à mettre en oeuvre un procédé selon l'une quelconque des revendications 1 à 15.

19. Programme d'exploitation selon la revendication 18, transporté sur un support.

20. Programme d'exploitation selon la revendication 19, dans lequel le support est un support de transmission.

21. Programme d'exploitation selon la revendication 19, dans lequel le support est un support de stockage.
